(19) Europäisches Patentamt
European Patent Office
Office européen des brevets

(11) Veröffentlichungsnummer: **0 169 939**
**A2**

(12) # EUROPÄISCHE PATENTANMELDUNG

(21) Anmeldenummer: **84115505.4**

(22) Anmeldetag: **15.12.84**

(51) Int. Cl.⁴: **B 01 D 53/36**
**B 01 J 23/56, B 01 J 37/02**

(30) Priorität: **31.07.84 DE 3428232**

(43) Veröffentlichungstag der Anmeldung:
**05.02.86 Patentblatt 86/6**

(84) Benannte Vertragsstaaten:
**AT BE CH DE FR GB IT LI LU NL SE**

(71) Anmelder: **SÜD-CHEMIE AG**
**Lenbachplatz 6**
**D-8000 München 2(DE)**

(72) Erfinder: **Schneider, Michael, Dr.**
**Waldparkstrasse 54a**
**D-8012 Ottobrunn-Riemerling(DE)**

(72) Erfinder: **Kochloefl, Karl, Dr.**
**Kreuzstrasse 2**
**D-8052 Moosburg(DE)**

(72) Erfinder: **Prigge, Ditmar, Dr.**
**Silcherstrasse 5**
**D-8000 München 40(DE)**

(74) Vertreter: **Reitzner, Bruno, Dr. et al,**
**Patentanwälte Dipl.-Ing. R. Splanemann Dr. B. Reitzner**
**Tal 13**
**D-8000 München 2(DE)**

(54) **Katalysator zur Entfernung von Stickoxiden aus Abgasen.**

(57) Katalysator zur Entfernung von Stickoxiden aus Abgasen, insbesondere aus Schwefeloxide enthaltenden Abgasen durch katalytische Reduktion der Stickoxide zu Stickstoff. Der Katalysator enthält ein oder mehrere Edelmetalle auf einem Träger und ist dadurch gekennzeichnet, daß der Träger einen inerten Grundträger enthält, auf den eine Zwischenschicht aus $\gamma$-$Al_2O_3$, einen Siliciumdioxid oder einem Aluminiumsilicat, gegebenenfalls zusammen mit einem Oxid des Lanthans und/oder der Lanthaniden aufgebracht ist, und daß in oder auf dieser Zwischenschicht ein oder mehrere Edelmetalle aus der Gruppe Ruthenium, Rhodium, Palladium und/oder Platin aufgebracht sind.

EP 0 169 939 A2

Die Erfindung betrifft einen Katalysator zur Entfernung von Stickoxiden aus Abgasen, insbesondere aus Schwefeloxide enthaltenden Abgasen, durch katalytische Reduktion der Stickoxide zu Stickstoff, enthaltend ein oder mehrere Edelmetalle auf einem Träger.

Unter Abgasen versteht man erfindungsgemäß insbesondere die Abgase von Feuerungsanlagen, z.B. von Kraftwerken, Kesselanlagen, die Abgase von Motoren und Turbinen sowie die Abgase von chemischen Anlagen und von Metallbeizereien.

Unter Stickoxiden versteht man erfindungsgemäß $NO$, $NO_2$, $N_2O_4$, $N_2O_5$ und $N_2O$, die im allgemeinen durch die Formel $NO_x$ gekennzeichnet werden. Das wichtigste Stickoxid ist das NO.

Unter Schwefeloxiden versteht man erfindungsgemäß $SO_2$ und $SO_3$, die durch die Formel $SO_x$ gekennzeichnet werden.

Bei den in der Praxis fast ausschließlich angewendeten Verfahren zur Entfernung von Stickoxiden werden die Stickoxide mit Ammoniak als Reduktionsmittel zu Stickstoff reduziert. Für das am häufigsten vorkommende NO verläuft die Reaktion entsprechend den nachstehend angegebenen Gleichungen:

$$6NO + 4\ NH_3 \longrightarrow 5N_2 + 6H_2O \qquad (1)$$

bzw. wenn $O_2$ im Abgas vorhanden ist:

$$4NO + 4\ NH_3 + O_2 \longrightarrow 4N_2 + 6H_2O \qquad (2).$$

Beispiele für derartige Verfahren sind in den Deutschen Offenlegungsschriften 2 458 888, 2 539 003, 2 603 910, 2 705 901, 2 832 002 und 3 031 286 beschrieben. Als Katalysatoren für diese Reduktionsverfahren mit $NH_3$ werden beispielsweise solche auf der Grundlage von Eisenoxid oder Kupferoxid verwendet. Da derartige Katalysatoren jedoch in Anwesenheit von $SO_x$ leicht in die entsprechenden Sulfate umgewandelt werden, was zu einer Desaktivierung oder sogar zu einer mechanischen Zerstörung der Katalysatoren führen kann, hat man bereits Katalysatoren eingesetzt, die gegenüber $SO_x$ beständig sind. Bei diesen Katalysatoren handelt es sich in der Regel um Katalysatoren auf einem gegen $SO_x$ beständigen Trägermaterial, z.B. auf der Basis von Titandioxid mit Zusätzen von Vanadiumpentoxid, Chromtrioxid, Molybdäntrioxid, Wolframtrioxid und ähnlichen Substanzen.

Die Reduktion der Stickoxide in Anwesenheit von Sauerstoff und $SO_2$ kann mit $NH_3$ durchgeführt werden. Allerdings soll die Oxidation von $SO_2$ zu $SO_3$ vermieden werden, da dieses mit Ammoniak zu Ammoniumbisulfat reagiert. Das Ammoniumbisulfat scheidet sich auf den Teilen der Apparatur ab, wodurch eine mechanische Verstopfung des Leitungssystems und der nachgeschalteten Wärmetauscher auftreten kann.

Es ist ferner bekannt, die in den Abgasen enthaltenen Stickoxide mit Wasserstoff, Kohlenmonoxid oder Methan zu reduzieren. Die Reduktion der Stickoxide mit Wasserstoff und Kohlenmonoxid erfolgt (für NO, dem am häufigsten vorkommenden Stickoxid) nach den Gleichungen:

$$2\,NO + 2H_2 \longrightarrow N_2 + H_2O \qquad (3)$$

$$2\,NO + 2CO \longrightarrow N_2 + CO_2 \qquad (4)$$

Ein derartiges Verfahren ist beispielsweise aus der DE-OS 24 33 479 bekannt. Als Katalysatoren wurden solche auf der Basis von Kupfer, Elementen aus den Gruppen der Alkali- und/oder Erdalkali- und/oder Übergangsmetalle mit einem geringeren Gehalt an Edelmetall, vorzugsweise Rhodium und/oder Ruthenium, auf Aluminiumoxid als Trägermaterial verwendet. Die Verwendung von Kupfer als Katalysatorkomponente wurde als wesentlich angesehen. Die Katalysatoren sind erst bei Temperaturen von mehr als 300°C aktiv. Ein Nachteil dieses Verfahrens besteht ferner darin, daß der Einsatz von Reduktionsgasen, wie Wasserstoff, erhebliche Transport- und Lagerprobleme bietet, da diese Gase unter Druck gehalten werden müssen.

Aus der DE-OS 25 39 346 ist ferner ein Verfahren zur Entfernung von Stickoxiden aus Gasgemischen, z.B. aus Verbrennungs-Abgasen, durch katalytische Reduktion bekannt, wobei als Reduktionsmittel aliphatische Alkohole mit 1 bis 10 Kohlenstoffatomen verwendet werden. Das bevorzugte Reduktionsmittel ist Methanol. Die Reduktion wird bei Temperaturen von etwa 250 bis 450°C durchgeführt. Als Katalysatoren können u.a. Metalle der Platingruppe, insbesondere Iridium, auf einem Trägermaterial, wie Tonerde, verwendet werden.

Die bei allen bekannten Verfahren verwendeten Katalysatoren zeigten jedoch nur bei verhältnismäßig hohen Temperaturen, d.h. im allgemeinen im Temperaturbereich von etwa 300 bis 500°C, eine befriedigende Aktivität. Die katalytische Reinigungsstufe mußte also z.B. bei der Behandlung der Abgase von Feuerungsanlagen vor dem Dampferzeuger angeordnet werden, wobei nicht nur Platzprobleme, sondern auch Probleme bei der Auswahl von temperaturbeständigen Reaktorwerkstoffen auftraten.

Außerdem enthalten diese Abgase noch staubförmige Verunreinigungen, die sich auf den Katalysatoren festsetzen können, wenn die katalytische Reinigungsstufe vor dem Staubabscheider angeordnet wird. Ferner wurde festgestellt, daß die bekannten Hochtemperaturkatalysatoren auch die Umsetzung der Reduktionsgase mit dem in den Abgasen üblicherweise vorhandenen Sauerstoff katalysieren, d.h. bezüglich der Reduktion der Stickoxide nicht selektiv sind.

Der Erfindung liegt daher die Aufgabe zugrunde, Katalysatoren der eingangs definierten Gattung zur Verfügung zu stellen, die eine gute Tieftemperaturaktivität und -selektivität haben.

Zur Lösung dieser Aufgabe sind die erfindungsgemäßen Katalysatoren dadurch gekennzeichnet, daß der Träger einen inerten Grundträger enthält, auf den eine Zwischenschicht aus $\gamma$-$Al_2O_3$, einem Siliciumdioxid oder einem Alumosilicat, ggf. zusammen mit einem Oxid des Lanthans und/oder der Lanthaniden aufgebracht ist, und daß in oder auf dieser Zwischenschicht ein oder mehrere Edelmetalle aus der Gruppe Ruthenium, Rhodium, Palladium und/oder Platin aufgebracht sind.

Mit Hilfe der erfindungsgemäßen Katalysatoren ist es möglich, die Reduktion der Stickoxide bei Temperaturen unterhalb 300°C durchzuführen. Ferner kann mit Hilfe der erfindungsgemäßen Katalysatoren die Reduktion der Stickoxide in Gegenwart eines sauerstoffhaltigen Gemisches aus Abgas

und gasförmigem Reduktionsmittel durchgeführt werden. Überraschenderweise wurde festgestellt, daß der im Reaktionsgemisch enthaltene Sauerstoff nur zu einem geringen Teil mit den Reduktionsgasen reagiert. Es findet also eine selektive Reduktion der Stickoxide statt. Dieses Ergebnis ist von besonderer wirtschaftlicher Bedeutung, da z.B. Rauchgase bis zu 10 % Sauerstoff enthalten können. Auch in Anwesenheit von Schwefeloxiden findet eine selektive Reduktion der Stickoxide statt.

Unter dem Begriff "Siliciumdioxid" versteht man erfindungsgemäß $SiO_2$ sowie hochkondensierte Kieselsäure mit wechselnden Wassergehalten, wie sie beispielsweise durch Eintrocknen und Calcinieren von Kieselsäuresolen erhalten wird. Diese Kieselsäuresole enthalten kolloides, amorphes $SiO_2$ in Konzentrationen bis zu 60 Gew.-% (vgl. Römpps Chemie-Lexikon, 8. Auflage, 1983, Seite 2108/2109).

Unter dem Begriff "Aluminiumsilicat" versteht man erfindungsgemäß Verbindungen mit unterschiedlichen Anteilen an $Al_2O_3$ und $SiO_2$. Verbindungen, in denen das Aluminium anstelle von Silicium Gitterplätze einnimmt, bezeichnet man als Alumosilicate. Die Aluminiumsilicate können zum Beispiel durch Umsetzung von Kieselsäuresolen und Alumosolen erhalten werden, wobei entsprechend den bei der Umsetzung bzw. bei der Calcinierung angewendeten Temperaturen Produkte mit wechselnden Wassergehalten erhalten werden können. Der Begriff "Alumosol" wird hierbei in Anlehnung an den Begriff "Alumogel" für eine wäßrige Dispersion von Aluminiumhydroxiden wechselnder Zusammensetzung (Verhältnis $Al_2O_3$: $H_2O$) verwendet.

Unter dem Begriff "inerter Grundträger" versteht man Trägermaterialien, insbesondere mit einer spezifischen BET-Oberfläche von weniger als 50 $m^2/g$, vorzugsweise von weniger als 25 $m^2$, die vorzugsweise mit den in den Abgasen vorhandenen Schwefeloxiden keine Sulfate bilden. Vorzugsweise beträgt der Anteil der Poren mit einem Durchmesser von mehr als 95 nm mehr als 50 %. Bevorzugte inerte Grundträger sind $\alpha$-Aluminiumoxid, Titandioxid (gegebenenfalls im Gemisch mit Vanadiumoxid), keramische Materialien und/oder Aluminium-Magnesiumsilikat.

Der Anteil des Materials der Zwischenschicht kann innerhalb weiter Grenzen variiert werden; vorzugsweise beträgt dieser Anteil am gesamten Katalysator etwa 0,1 bis 15 Gew.-%, insbesondere etwa 1,0 bis 10 Gew.-%.

Die Edelmetallkonzentration des erfindungsgemäßen Katalysators beträgt vorzugsweise etwa 0,01 bis 1 Gew.-%, insbesondere etwa 0,2 bis 0,6 Gew.-%, bezogen auf den gesamten Katalysator.

Gegenstand der Erfindung ist ferner ein Verfahren zur Herstellung der vorstehend definierten Katalysatoren; dieses Verfahren ist dadurch gekennzeichnet, daß man den

Grundträger mit einer Lösung eines Aluminiumsalzes, einem Kieselsol oder einem Gemisch aus einem Kieselsol und einem Alumosol und gegebenenfalls mit einer Lösung eines Salzes des Lanthans und/oder der Lanthaniden imprägniert, den so behandelten Grundträger trocknet und calciniert, um die Zwischenschicht aus $\gamma$-$Al_2O_3$, einem Siliciumoxid oder einem Aluminiumsilicat und gegebenenfalls den Oxiden des Lanthans und/oder der Lanthaniden zu erzeugen, und daß man die Zwischenschicht mit einem oder mehreren Edelmetallsalzen imprägniert und das so erhaltene Produkt trocknet und calciniert.

Insbesondere verwendet man zur Imprägnierung des Grundträgers eine Aluminiumnitratlösung und gegebenenfalls eine Lösung der Nitrate des Lanthans und/oder der Lanthaniden, während man zur Imprägnierung der Zwischenschicht eine Lösung eines oder mehrerer Edelmetallchloride verwendet.

Um die Zwischenschicht aus Siliciumdioxid bzw. Aluminiumsilicat zu erzeugen tränkt man den Grundträger vorzugsweise mit einem wäßrigen Kieselsäuresol bzw. einem Gemisch aus einem wäßrigen Kieselsäure-Aluminiumhydroxid-Sol, worauf man das so imprägnierte Produkt trocknet und calciniert.

Gegenstand der Erfindung ist ferner die Verwendung der erfindungsgemäßen Tieftemperaturkatalysatoren bei Temperaturen unterhalb 300°C.

Der erfindungsgemäße Katalysator wird vorzugsweise in sauerstoffhaltigen Abgasen eingesetzt, da er die Umsetzung des Sauerstoffs mit den Reduktionsgasen nicht katalysiert. Vorzugsweise wird der Katalysator in Abgasen mit einem Sauerstoffgehalt bis zu etwa 7 Vol.-%, insbesondere von etwa 3 bis 5 Vol.-% eingesetzt.

Die erfindungsgemäßen Katalysatoren ermöglichen die Reduktion von Stickoxiden in Anwesenheit von Schwefeloxiden. Außerdem katalysieren sie auch bei einem hohen Gehalt an Reduktionsgasen (insbesondere Wasserstoff) die Reduktion der Schwefeloxide zu Schwefelweasserstoff nicht. Im allgemeinen werden die erfindungsgemäßen Katalysatoren bei Abgasen eingesetzt, deren Schwefeloxidgehalt bis etwa 1000 ppm beträgt

Zur Reduktion der in den Abgasen enthaltenen Stickoxide können alle bekannten Reduktionsmittel verwendet. werden. Beispielsweise kann man als Reduktionsmittel Ammoniak einsetzen, insbesondere im Temperaturbereich von etwa 130 bis 240°C.

Ferner können als Reduktionsmittel Wasserstoff, Kohlenmonoxid und/oder Methan verwendet werden.

Weiterhin kann als Reduktionsmittel für die Stickoxide Methanol verwendet werden. Ein derartiges Verfahren ist aus der DE-OS 25 39 346 bekannt, wobei jedoch andere Katalysatoren eingesetzt werden. Hierbei kann bei der Reduktion der Stickoxide in Anwesenheit von Schwefelverbindungen $H_2S$ gebildet werden, der die Aktivität des Katalysators beeinträchtigt. Dieses Problem tritt jedoch bei den Katalysatoren gemäß der Erfindung nicht auf. Ferner wurden bei der Zersetzung des Methanols an den bekannten $NO_x$-Reduktionskatalysatoren Formaldehyd, Ameisensäure und Dimethylether als unerwünschte Nebenprodukte gebildet, die die Katalysatoren im Langzeitbetrieb ebenfalls desaktivieren und die Umwelt belasten. Diese Nebenprodukte treten bei Verwendung der erfindungsgemäßen Katalysatoren nicht auf.

Als Reduktionsmittel für die Stickoxide kann ferner ein durch katalytische Zersetzung bzw. durch Wasserdampf-Reformierung von Methanol erhaltenes Gasgemisch, insbesondere im Temperaturbereich von 150 bis 300°C, eingesetzt werden.

Ein solches Verfahren ist (mit anderen Katalysatoren) Gegenstand der deutschen Patentanmeldung P 33 45 657.4-43. Dieses Verfahren hat gegenüber dem Verfahren unter Verwendung von Methanol den Vorteil, daß bei Anwesenheit von Schwefelverbindungen kein $H_2S$ gebildet wird und keine Nebenreaktionen auftreten, die zur Bildung von Formaldehyd, Ameisensäure und Dimethylether führen. Ferner kann mit Hilfe dieses Verfahrens die Reaktion im Sinne einer Veränderung des $H_2/CO$-Verhältnisses gesteuert werden. Diese Steuerungsmöglichkeit ist für einen maximalen $NO_x$-Umsatz erwünscht, da dieser in Abhängigkeit von der Temperatur vom $H_2/CO$-Verhältnis bestimmt wird. Außerdem hat die Verwendung von Methanol als Ausgangsmaterial für das reduzierende Gasgemisch den Vorteil, daß es im Gegensatz zu komprimierten Gasen leicht transportiert und gelagert werden kann.

Die katalytische Zersetzung des Methanols erfolgt nach der Gleichung

$$CH_3OH \longrightarrow CO + 2H_2 \qquad (5),$$

die katalytische Wasserdampf-Reformierung nach der Gleichung:

$$CH_3OH + H_2O \longrightarrow CO_2 + 3H_2 \qquad (6).$$

Man erkennt also, daß man durch Variieren des Molverhältnisses zwischen Methanol und $H_2O$ das Verhältnis zwischen den zur Reduktion von $NO_x$ verwendeten gasförmigen Reaktionsprodukten CO und $H_2$ in weiten Grenzen variieren kann. Vorzugsweise wendet man bei der Wasserdampf-Reformierung ein Molverhältnis zwischen Methanol und $H_2O$ von etwa 1 bis 5 an. Auch bei der Methanolzersetzung ist ein gewisser $H_2O$-Gehalt wünschenswert, um Kohlenstoffabscheidungen auf dem Katalysator zu vermeiden (Molverhältnis $H_2O : CH_3OH = 0,05 - 0,2 : 1$).

Für die Zersetzung bzw. Wasserdampf-Reformierung des Methanols können an sich bekannte Katalysatoren verwendet werden, beispielsweise Edelmetall-Trägerkatalysatoren, insbesondere auf Titandioxid, Zirkondioxid oder Cerdioxid, bzw. kupferhaltige Katalysatoren.

Besonders bevorzugt verwendet man als Wasserdampf-Reformierkatalysator einen Katalysator, der

A) eine Metallkomponente aus einem der mehreren Elementen der 8. Nebengruppe des Periodensystems auf einem Trägermaterial auf der Basis

$B_1$) von $TiO_2$ oder $CeO_2$, gegebenenfalls im Gemisch mit anderen feuerfesten Metalloxiden und/oder hydraulischen Bindern oder

$B_2$) von $TiO_2$, das auf die Oberfläche des vorgeformten feuerfesten Materials aus $Al_2O_3$ oder Keramik aufgebracht ist,

enthält. Ein derartiger Katalysator ist Gegenstand der deutschen Patentanmeldung P 33 40 569.7. Die Metallkomponente dieses Katalysators stellt vorzugsweise ein oder mehrere Edelmetalle, insbesondere Platin und/oder Palladium und/oder Rhodium dar. Die Edelmetallkonzentration beträgt vorzugsweise 0,03 bis 3 Gew.-%, insbesondere 0,15 bis 0,5 Gew.-%, bezogen auf den gesamten Katalysator. Als feuerfeste Metalloxide enthält der Katalysator vorzugsweise $Al_2O_3$ und/oder $Cr_2O_3$ und als hydraulische Binder Calcium-Aluminatzement, wobei die Konzentrationen dieser Zusätze 2 bis 50 Gew.-%, insbesondere 5 bis 25 Gew.-%, bezogen auf den gesamten Katalysator, beträgt.

Der Katalysator kann dadurch erhalten werden, daß man aus $TiO_2$ oder $CeO_2$, gegebenenfalls mit anderen feuerfesten Metalloxiden, durch Verpressen Formkörper herstellt, diese calciniert und mit der Metallkomponente imprägniert. Hierbei kann man dem Titandioxid hydraulischen Binder zusetzen, nach Wasserzugabe durch Verpressen Formkörper herstellen, diese trocknen, calcinieren und mit der Metallkomponente imprägnieren. Ferner kann man der zu verpressenden Masse Gleitmittel, wie Aluminiumstearat und/oder Graphit, zusetzen.

Nach einer anderen Ausführungsform kann dieser Katalysator dadurch hergestellt werden, daß man $TiO_2$ auf die Oberfläche eines vorgeformten feuerfesten Materials, wie $Al_2O_3$ oder Keramik, aufbringt, den so behandelten Formkörper calciniert und mit der Metallkomponente imprägniert. Das $TiO_2$ wird hierbei vorzugsweise durch Imprägnieren der Formkörper mit Alkoxytitanaten, anschließender Hydrolyse und Calcinierung aufgebracht. Bei den Formkörpern handelt es sich vorzugsweise um vorgeformte Kugeln, Tabletten, Ringe oder Waben aus $Al_2O_3$ oder Keramik. Die Imprägnierung mit der Metallkomponente wird vorzugsweise unter Verwendung von wasserlöslichen Edelmetallsalzen, insbesodnere von $H_2PtCl_6$ oder $(NH_4)_2PtCl_6$ oder den entsprechenden Pd oder Rh-Salzen durchgeführt. Die Calcinierung des mit der Metallkomponente imprägnierten Trägermaterials wird vorzugsweise bei Temperaturen zwischen 450 und 650°, insbesondere zwischen 550 und 640°C durchgeführt.

Der vorstehend näher erläuterte Katalysator ermöglicht es, die Umsetzung des Methanols entweder unter den Bedingungen der Methanolspaltung (Gleichung 5) oder unter den Bedingungen der Methanoldampfreformierung (Gleichung 6) durchzuführen, wobei lediglich der Anteil des zugesetzten Wasserdampfes variiert wird. Der Katalysator ist bei unterschiedlichen Verfahrensbedingungen stabil und neigt unter den Bedingungen der Reaktion gemäß Gleichung 5 nicht zur Koksbildung. Ferner kann dieser Katalysator auch in Gegenwart von Sauerstoff eingesetzt werden, also unter Bedingungen, bei denen die bekannten Nichtedelmetall-Katalysatoren (insbesondere Kupferkatalysatoren) nicht stabil sind.

Die Zersetzung bzw. Reformierung des Methanols wird vorzugsweise bei Temperaturen im Bereich von etwa 400 bis 600°C durchgeführt. Die Raumgeschwindigkeiten liegen im allgemeinen im Bereich von etwa 0,5 bis 20 Liter/h·Liter Katalysator (bezogen auf das wasserhaltige Methanol).

Die Erfindung ist durch die nachstehenden Beispiele erläutert.

Beispiele 1 bis 17 beschreiben die Herstellung der Träger bzw. der Katalysatoren; in den Anwendungsbeispielen 1 und 2 sind die bei der Entfernung von Stickoxiden aus Abgasen mit $NH_3$ bzw. $H_2$ als Reduktionsmittel erzielten Ergebnisse angegeben.

## Beispiele 1 bis 17

### A Herstellung der Träger

Träger T 1:
147,2 g $Al(NO_3)_3 \cdot 9\ H_2O$ wurden in dest. Wasser gelöst und die Lösung auf ein Volumen von 245 ml verdünnt. 200 g eines $\alpha$-$Al_2O_3$-Trägers (Tabletten mit 3,7 mm Durchmesser und 3,5 mm Höhe; BET-Oberfläche = 4,0 $m^2/g$; Hg-Porenvolumen = 0,24 ml/g; Wasseraufnahmefähigkeit = 0,25 ml/g) wurden 20 Minuten in die auf 70-80°C erwärmte Al-Nitratlösung getaucht. Nach dem Abtropfen der überschüssigen Lösung wurden die Tabletten 2 Stunden bei 400°C calciniert, wobei das Al-Nitrat in $\gamma$-$Al_2O_3$ umgewandelt wurde. Der so erhaltene Träger T 1 enthielt 2,0 % $\gamma$-$Al_2O_3$ als Auflage.

Träger T 2:

100 g eines kommerziellen Aluminiumoxidhydrats wurden unter Rühren in 400 ml 1,2 %iger $HNO_3$ eingetragen. In die erhaltene Dispersion wurden 150 g α -$Al_2O_3$-Tabletten (wie bei T 1) 20 Minuten eingetaucht. Nach dem Abtropfen der überschüssigen Dispersion wurden die Tabletten 3 Stunden bei 400°C calciniert. Der so erhaltene Träger T 2 enthielt 2,1 % γ-$Al_2O_3$ als Auflage.

Träger T 3:

132,5 g $Al(NO_3)_3 \cdot 9\ H_2O$ und 5,3 g $La(NO_3)_3 \cdot 6\ H_2O$ wurden in dest. Wasser gelöst und die Lösung auf ein Volumen von 245 ml verdünnt. 150 g eines α -$Al_2O_3$-Trägers (wie bei T 1) wurden in die auf 70-80°C erwärmte Nitratlösung wie bei T 1 beschrieben, eingetaucht und anschließend 3 Stunden bei 400°C calciniert. Der erhaltene Träger T 3 enthielt 1,8 % γ-$Al_2O_3$ und 0,2 % $La_2O_3$ als Auflage.

Träger T 4:

132,5 g $Al(NO_3)_3 \cdot 9\ H_2O$ und 4,5 g Nitratgemisch der Seltenen Erden (das Nitratgemisch ergibt bei der thermischen Zersetzung ein Oxidgemisch, REO, mit 60 % $La_2O_3$, 15 % $CeO_2$, 17,5 % $Nd_2O_3$, 7,5 % $Pr_6O_{11}$) wurden in dest. Wasser gelöst und die Lösung auf ein Volumen von 245 ml gebracht. 150 g eines α-$Al_2O_3$-Trägers (wie bei T 1) wurden in die auf 70-80°C erwärmte Nitratlösung 20 Minuten eingetaucht und nach dem Abtropfen der überschüssigen Lösung 3 Stunden bei 400°C calciniert. Der erhaltene Träger T 4 enthielt 1,8 % γ-$Al_2O_3$ und 0,2 % REO als Auflage.

Träger T 5:

147,2 g $Al(NO_3)_3 \cdot 9\ H_2O$ wurden in dest. Wasser gelöst und auf ein Volumen von 245 ml gebracht. 150 g eines Cordierit-Trägers (2 $MgO \cdot 2\ Al_2O_3 \cdot 5\ SiO_2$; 4,0 Extrudat mit BET-Oberfläche = 0,5 m²/g; Wasseraufnahme = 0,24 ml/g) wurden 20 Minuten in die auf 70-80°C erwärmte Nitratlösung getaucht; nach dem Abtropfen der überschüssigen Tauchlösung wurde 3 Stunden bei 400°C calciniert. Der so erhaltene Träger T 5 enthielt 2,1 % $\gamma$-$Al_2O_3$ als Auflage.

Träger T 6:

375,4 g eines kommerziellen, hochdispersen Titandioxids wurden mit 35,1 g feinvermahlenem $NH_4VO_3$ trocken gemischt und dann unter portionsweiser Zugabe von 130 ml $H_2O$ zu einem Teig verknetet. Das Produkt wurde über Nacht bei 120°C getrocknet, dann durch ein 0,4 mm-Sieb granuliert, mit 28,7 g Aluminiumstearat trocken gemischt und zu zylindrischen Tabletten von 4,5 mm Durchmesser und 4,5 mm Höhe verpreßt. Die Tabletten wurden danach 3 Stunden bei 550°C calciniert.

<u>Träger T 7:</u>

150 g eines Cordierit-Trägers (2MgO $\cdot$ $Al_2O_3$ $\cdot$ 5 $SiO_2$; 4,0 mm Extrudat mit einer BET-Oberfläche von 0,5 m²/g; Wasseraufnahmefähigkeit = 0,24 ml/g) wurden 20 Minuten in ein Kieselsol mit 10 % $SiO_2$-Gehalt getaucht; nach Abtropfen der übers hüssigen Tauchlösung wurde 3 Stunden bei 400°C calciniert. Der so erhaltene Träger T 7 enthielt 2,5 % $SiO_2$ als Auflage.

Träger T 8:

150 g eines Cordierit-Trägers (wie für Träger T 7 verwendet) wurden in einer Mischung gleicher Teile Kieselsol mit 10 % $SiO_2$ und Alumo-Sol mit 10 % $Al_2O_3$ 20 Minuten getaucht; nach Abtropfen der überschüssigen Tauchlösung wurde 3 Stunden bei 400°C calciniert. Der so erhaltene Träger T 8 enthielt 1,2 % $SiO_2$ und 1,2 % $Al_2O_3$ als Auflage

## B Herstellung der Katalysatoren

Vergleichkatalysator A:

100 g eines $\gamma$-$Al_2O_3$-Trägers (4x4 mm Tabletten mit BET-Oberfläche = 181 m²/g; Hg-Porenvolumen = 0,16 ml/g; Wasseraufnahmefähigkeit = 0,42 ml/g) wurden mit einer Lösung von 0,98 g Rhodium-(III)-chloridhydrat in 15 ml $H_2O$ besprüht und wie bei K 1 beschrieben, getrocknet und calciniert. Die physikalischen und chemischen Daten des Katalysators sind in Tabelle I angegeben.

Katalysator K 1 (Beispiel 1):

100 g des Trägers T 1 wurden mit einer Lösung von 0,40 g $H_2PtCl_6 \cdot 6H_2O$ (37,7 % Pt) in 15 ml $H_2O$ gleichmäßig besprüht. Darauf wurden die Tabletten 2 Stunden bei 120°C getrocknet und anschließend 1 Stunde bei 200°C und 2 Stunden bei 400°C calciniert. Die physikalischen und chemischen Daten des so erhaltenen Katalysators K 1 sind in Tabelle I angegeben.

Katalysator K 2 (Beispiel 2):

100 g des Trägers T 1 wurden mit einer Lösung von 0,93 g $H_2PtCl_6 \cdot 6\ H_2O$ (37,7 % Pt) in 15 ml $H_2O$ besprüht und wie im Beispiel 1 beschrieben calciniert. Die physikalischen und chemischen Daten von Katalysator K 2 sind in Tabelle I angegeben.

Katalysator K 3 (Beispiel 3):

100 g des Trägers T 1 wurden mit einer Lösung von 0,42 g Rhodium-(III)-chloridhydrat (35,8 % Rh) in 15 ml $H_2O$ besprüht und wie im Beispiel 1 beschrieben calciniert. Die physikalischen und chemischen Daten von Katalysator K 3 sind in Tabelle I angegeben.

Katalysator K 4 (Beispiel 4):

100 g des Trägers T 1 wurden mit einer Lösung von 0,98 g Rhodium-(III)-chloridhydrat (35,8 % Rh) in 15 ml $H_2O$ besprüht und analog Beispiel 1 weiterbehandelt. Die physikalischen und chemischen Daten von Katalysator K 4 sind in Tabelle I angegeben.

Katalysator K 5 (Beispiel 5):

100 g des Trägers T 1 wurden mit einer Lösung von 1,01 g $PdCl_2 \cdot 2\ H_2O$ (49,9 % Pd) in 15 ml $H_2O$ besprüht und wie im

Beispiel 1 beschrieben, weiterverarbeitet. Die physikalischen und chemischen Daten von Katalysator K 5 sind in Tabelle I angegeben.

Katalysator K 6 (Beispiel 6):

100 g des Trägers T 1 wurden mit einer Lösung von 1,12 g Ruthenium-(III)-chloridhydrat (35,65 % Ru) in 15 ml $H_2O$ besprüht und dann getrocknet und calciniert,wie im Beispiel 1 beschrieben. Die physikalischen und chemischen Daten von Katalysator K 6 sind in Tabelle I angegeben.

Katalysator K 7 (Beispiel 7):

100 g des Trägers T 3 wurden mit einer Lösung von 0,40 g $H_2PtCl_6 \cdot 6H_2O$ (37,7 % Pt) analog Beispiel 1 besprüht und weiterverarbeitet. Die physikalischen und chemischen Daten des Katalysators K 7 sindin Tabelle I angegeben.

Katalysator K 8 (Beispiel 8):

100 g des Trägers T 6 wurden mit einer Lösung von 0,93 g $H_2PtCl_6 \cdot 6\ H_2O$ (37,7 % Pt) in 12 ml $H_2O$ besprüht und wie im Beispiel 1 getrocknet und calciniert. Die physikalischen und chemischen Daten von Katalysator K 8 sind in Tabelle I angegeben.

Katalysator K 9 (Beispiel 9):

100 g des Trägers T 6 wurden mit einer Lösung von 0,98 g Rhodium-(III)-chloridhydrat (35,8 % Rh) in 12 ml $H_2O$ besprüht und analog Beispiel 1 weiterbehandelt. Die physikalischen und chemischen Daten von Katalysator K 9 sind in Tabelle I angegeben.

0169939

Katalysator K 10 (Beispiel 10):

100 g des Trägers T 1 wurden mit einer Lösung von 0,98 g Rhodium-(III)-chloridhydrat (35,8 % Rh) in 15 ml $H_2O$ gleichmäßig besprüht. Danach wurden die Tabletten bei 120°C 2 Stunden getrocknet undsodann 1 Stunde bei 200°C und 2 Stunden bei 400°C calciniert. Die physikalischen und chemischen Daten des Katalysators K 10 sind in Tabelle I angegeben.

Katalysator K 11 (Beispiel 11):

100 g des Trägers T 2 wurden, wie bei K 10 beschrieben, mit Rh belegt. Die physikalischen und chemischen Daten des Katalysators K 11 sind in Tabelle I angegeben.

Katalysator K 12 (Beispiel 12):

100 g des Trägers T 3 wurden, wie bei K 10 beschrieben, mit Rh belegt. Die physikalischen und chemischen Daten des Katalysators K 12 sind in Tabelle I angegeben.

Katalysator K 13 (Beispiel 13):

100 g des Trägers T 4 wurden, wie bei K 10 beschrieben, mit Rh belegt. Die physikalischen und chemischen Daten von Katalysator K 13 sind in Tabelle I angegeben.

Katalysator K 14 (Beispiel 14):

100 g des Trägers T 5 wurden, wie bei K 10 beschrieben, mit Rh belegt. Die physikalischen und chemischen Daten von Katalysator K 14 sind in Tabelle I angegeben.

Katalysator K 15 (Beispiel 15):

100 g des Trägers T 1 wurden mit einer Lösung von 1,12 g Ruthenium-(III)-chloridhydrat (35,65 % Ru) in 15 ml $H_2O$ gleichmäßig besprüht. Die Trocknung und Calcinierung erfolgten wie bei Katalysator K 10 beschrieben. Die physikalischen und chemischen Daten von Katalysator K 15 sind in Tabelle I angegeben.

0169939

Katalysator K 16 (Beispiel 16):

100 g des Trägers T 7 wurden,wie bei K 10 beschrieben, mit Rh belegt. Die physikalischen und chemischen Daten von Katalysator K 16 sind in Tabelle I angegeben.

Katalysator K 17 (Beispiel 17):

100 g des Trägers T 8 wurden, wie bei K 10 beschrieben, mit Rh belegt. Die physikalischen und chemischen Daten von Katalysator K 17 sind in Tabelle I angegeben.

Tabelle I

Chemische und physikalische Daten der Katalysatoren

| Katalysatoren | $\gamma$-$Al_2O_3$ (%) | andere Oxide (%) | Pt (%) | Rh (%) | Ru (%) | Pd (%) | BET $O_s$ ($m^2/g$) | Porenvolumen Hg-Penetration (ml/g) |
|---|---|---|---|---|---|---|---|---|
| VK A | 100 | - | - | 0,35 | - | - | 180 | 0,16 |
| K 1 | 2,0 | - | 0,15 | - | - | - | 6,0 | 0,21 |
| K 2 | 2,0 | - | 0,35 | - | - | - | 5,8 | 0,21 |
| K 3 | 2,0 | - | - | 0,15 | - | - | 6,1 | 0,19 |
| K 4 | 2,0 | - | - | 0,35 | - | - | 6,2 | 0,20 |
| K 5 | 2,0 | - | - | - | - | 0,50 | 6,0 | 0,20 |
| K 6 | 2,0 | - | - | - | 0,40 | - | 6,1 | 0,21 |
| K 7 | 1,8 | 0,2 $La_2O_3$ | 0,15 | - | - | - | 6,0 | 0,20 |
| K 8 | 0,7 | 92,6 $TiO_2$<br>6,7 $V_2O_5$ | 0,35 | - | - | - | 33 | 0,26 |
| K 9 | 0,7 | 92,6 $TiO_2$<br>6,7 $V_2O_5$ | - | 0,07 | - | - | 34 | 0,26 |

**Tabelle I** (Fortsetzung)

**Chemische und physikalische Daten der Katalysatoren**

| Katalysator | Hauptbest. der Zwischschicht (%) | $La_2O_3$ (%) | REO* (%) | Rh (%) | Ru (%) | BET $O_s$ ($m^2/g$) | Porenvolumen Hg-Penetration (ml/g) |
|---|---|---|---|---|---|---|---|
| K 10 | 2,0 -$Al_2O_3$ | - | - | 0,35 | - | 6,0 | 0,21 |
| K 11 | 2,1 " | - | - | 0,35 | - | 6,0 | 0,20 |
| K 12 | 1,8 " | 0,2 | - | 0,35 | - | 5,9 | 0,20 |
| K 13 | 1,8 " | - | 0,2 | 0,35 | - | 6,0 | 0,21 |
| K 14 | 2,1 " | - | - | 0,35 | - | 4,1 | 0,10 |
| K 15 | 2,0 " | - | - | - | 0,40 | 6,1 | 0,21 |
| K 16 | 2,5 $SiO_2$ | - | - | 0,35 | - | 6,5 | 0,21 |
| K 17 | 2,5 $SiO_2 \cdot Al_2O_3$ | - | - | 0,35 | - | 6,4 | 0,21 |

*REO = Oxidgemisch der Seltenen Erden mit 60 % $La_2O_3$, 15 % $CeO_2$, 17,5 % $Nd_2O_3$, 7,5 % $Pr_6O_{11}$

0169939

Anwendungsbeispiel 1

Ein Modellgas mit der Zusammensetzung: NO = 1000 ppm, $SO_2$ = 1000 ppm, $O_2$ = 3 Vol.-%, $H_2O$ = 10 Vol.-%, Rest $N_2$ wurde in einem Versuchsreaktor bei 220°C mit Ammoniak als Reduktionsgas über die in Tabelle I (Teil 1) angegebenen Katalysatoren K 1 bis K 9 und den Vergleichkatalysator A geleitet. Das Molverhältnis zwischen $NH_3$ im Reaktionsgas und NO im Abgas betrug 1,1 : 1. Die Raumgeschwindigkeit betrug 3000 Liter Abgas/h · Liter Katalysator.

Die mit den einzelnen Katalysatoren erzielten Umsätze sind in Tabelle II angegeben:

## Tabelle II

$NO_x$-Entfernung mit $NH_3$ als Reduktionsmittel

| Beispiel | Katalysator | Träger | $NO_x$-Umsatz (%) |
|---|---|---|---|
| 1 | K 1 | T 1 | 76 |
| 2 | K 2 | T 1 | 86 |
| 3 | K 3 | T 1 | 72 |
| 4 | K 4 | T 1 | 82 |
| 5 | K 5 | T 1 | 65 |
| 6 | K 6 | T 1 | 83 |
| 7 | K 7 | T 3 | 77 |
| 8 | K 8 | T 6 | 98 |
| 9 | K 9 | T 6 | 92 |
| Vergl.Beisp. | A | $\gamma$-$Al_2O_3$ | 74 |

K 1 = Pt (0,15 %)
K 2 = Pt (0,35 %)
K 3 = Rh (0,15 %)
K 4 = Rh (0,35 %)
K 5 = Pd (0,5 %)
K 6 = Ru (0,4 %)
K 7 = Pt (0,15 %)
K 8 = Pt (0,35 %)
K 9 = Rh (0,07 %)
A = Rh (0,35 %)

T 1 = $\alpha$-$Al_2O_3$ mit 2 % $\gamma$-$Al_2O_3$ aus $Al(NO_3)_3$
T 3 = $\alpha$-$Al_2O_3$ mit 1,8% $\gamma$-$Al_2O_3$+0,2% $La_2O_3$
T 6 = $TiO_2$+$V_2O_5$(94:6).

Aus Tabelle II erkennt man, daß am Vergleichskatalysator A niedrigere $NO_x$-Umsätze als mit den erfindungsgemäßen Katalysatoren erzielt wurden.

## Anwendungsbeispiel 2

Ein Modellgas mit der Zusammensetzung: NO = 1000 ppm, $SO_2$ = 1000 ppm, $O_2$ = 3 Vol.-%, $H_2O$ = 10 Vol.-%, Rest $N_2$ wurde in einem Versuchsreaktor bei 240°C mit einem durch katalytische Dampfreformierung von Methanol erhaltenen Reduktionsgas über die in Tabelle I (Teil 2) angegebenen Katalysatoren K 10 bis 15 sowie über den in Tabelle I (Teil 1) angegebenen Vergleichskatalysator A geleitet. Die Raumgeschwindigkeit betrug 3000 Liter Abgas/h · Liter Katalysator; das Molverhältnis zwischen $H_2$ im Reaktionsgas und NO im Abgas betrug 5 : 1.

Die mit den einzelnen Katalysatoren erzielten NO-Umsätze sind in Tabelle III angegeben.

## Tabelle III

$NO_x$-Entfernung mit $H_2$ als Reduktionsmittel

| Beispiel | Katalysator | Träger | $NO_x$-Umsatz (%) |
|---|---|---|---|
| 10 | K 10 | T 1 | 78 |
| 11 | K 11 | T 2 | 75 |
| 12 | K 12 | T 3 | 81 |
| 13 | K 13 | T 4 | 79 |
| 14 | K 14 | T 5 | 77 |
| 15 | K 15 | T 1 | 80 |
| 16 | K 16 | T 7 | 80 |
| 17 | K 17 | T 8 | 81 |
| Vergl.- Beisp. | $K_A$ | $\gamma$-$Al_2O_3$ | 72 |

K 10 = Rh (0,35 %)
K 11 = Rh (0,35 %)
K 12 = Rh (0,35 %)
K 13 = Rh (0,35 %)
K 14 = Rh (0,35 %)
K 15 = Ru (0,40 %)
K 16 = Rh (0,35 %)
K 17 = Rh (0,35 %)
A = Rh (0,35 %)

T 1 = $\alpha$-$Al_2O_3$ mit 2 % $\gamma$-$Al_2O_3$ aus $Al(NO_3)_3$
T 2 = $\alpha$-$Al_2O_3$ mit 2,1 % $\gamma$-$Al_2O_3$ aus $Al(OH)_3$
T 3 = $\alpha$-$Al_2O_3$ mit 1,8 % $\gamma$-$Al_2O_3$ + 0,2 % $La_2O_3$
T 4 = $\alpha$-$Al_2O_3$ mit 1,8 % $\gamma$-$Al_2O_3$ + 0,2 % REO
T 5 = Cordierit mit 2,1 % $\gamma$-$Al_2O_3$
T 7 = Cordierit mit 2,5 % $SiO_2$
T 8 = Cordierit mit 2,5 % $SiO_2 \cdot Al_2O_3$

Tabelle III zeigt, daß die neuen Katalysatoren K 10 bis K 17 gegenüber dem Vergleichskatalysator A deutlich höhere NO-Umsätze liefern. Ferner wurde festgestellt, daß die Aktivität des Vergleichskatalysators A im Langzeitversuch schneller abnahm als die der neuen Katalysatoren K 10 bis K 17.

Katalysator zur Entfernung von Stickoxiden aus Abgasen

PATENTANSPRÜCHE

1. Katalysator zur Entfernung von Stickoxiden aus Abgasen, insbesondere aus Schwefeloxide enthaltenden Abgasen, durch katalytische Reduktion der Stickoxide zu Stickstoff, enthaltend ein oder mehrere Edelmetalle auf einem Träger, dadurch gekennzeichnet, daß der Träger einen inerten Grundträger enthält, auf den eine Zwischenschicht aus $\gamma$-$Al_2O_3$, einem Siliciumdioxid oder einem Aluminiumsilicat, gegebenenfalls zusammen mit einem Oxid des Lanthans und/oder der Lanthaniden aufgebracht ist, und daß in oder auf dieser Zwischenschicht ein oder mehrere Edelmetalle aus der Gruppe Ruthenium, Rhodium, Palladium und/oder Platin aufgebracht sind.

2. Katalysator nach Anspruch 1, dadurch gekennzeichnet, daß der inerte Grundträger $\alpha$-Aluminiumoxid, Titandioxid, ein keramisches Material und/oder ein Aluminium-Magnesiumsilikat darstellt.

3. Katalysator nach Anspruch 1 oder 2, dadurch gekennzeichnet, daß der inerte Grundträger eine spezifische Ober-

fläche von weniger als 50 m²/g hat und der Anteil der Poren mit einem Durchmesser von mehr als 25 nm mehr als 50 % beträgt.

4. Katalysator nach einem der Ansprüche 1 bis 3, dadurch gekennzeichnet, daß der Anteil des Materials der Zwischenschicht am gesamten Katalysator etwa 0,1 bis 15 Gew.-%, vorzugsweise von 1,0 bis 10 Gew.-% beträgt.

5. Katalysator nach einem der Ansprüche 1 bis 4, dadurch gekennzeichnet, daß die Edelmetallkonzentration etwa 0,01 bis 1 Gew.-%, vorzugsweise etwa 0,2 bis 0,6 Gew.-%, bezogen auf den gesamten Katalysator, beträgt.

6. Verfahren zur Herstellung der Katalysatoren nach einem der Ansprüche 1 bis 5, dadurch gekennzeichnet, daß man den Grundträger mit einer Lösung des Aluminiumsalzes, einem Kieselsol oder einem Gemisch aus einem Kieselsol und einem Alumosol und gegebenenfalls mit einer Lösung eines Salzes des Lanthans und/oder der Lanthaniden imprägniert, den so behandelten Grundträger trocknet und calciniert, um die Zwischenschicht aus $\gamma$-$Al_2O_3$, einem Siliciumdioxid oder einem Aluminiumsilicat und gegebenenfalls den Oxiden des Lanthans und/oder der Lanthaniden zu erzeugen, und daß man die Zwischenschicht mit einem oder mehreren Edelmetallsalzen imprägniert und das so erhaltene Produkt trocknet und calciniert.

7. Verfahren nach Anspruch 6, dadurch gekennzeichnet, daß man zur Imprägnierung des Grundträgers eine Aluminiumnitratlösung und gegebenenfalls eine Lösung der Nitrate des Lanthans und/oder der Lanthaniden und zur Imprägnierung der Zwischenschicht eine Lösung einer oder mehrerer Edelmetallchloride verwendet.

8. Verwendung des Katalysators nach einem der Ansprüche 1 bis 7 als Tieftemperaturkatalysator bei Temperaturen unterhalb 300°C.

9. Verwendung nach Anspruch 8, dadurch gekennzeichnet, daß der Sauerstoffgehalt des Abgases bis zu etwa 7 Vol.-%, vorzugsweise etwa 3 bis 5 Vol.-% beträgt.

10. Verwendung nach Anspruch 8 oder 9, dadurch gekennzeichnet, daß der Schwefeloxidgehalt des Abgases bis etwa 1000 ppm beträgt.

11. Verwendung nach einem der Ansprüche 8 bis 10, dadurch gekennzeichnet, daß man als Reduktionsmittel für die Stickoxide Ammoniak im Temperaturbereich von 130-240°C einsetzt.

12. Verwendung nach einem der Ansprüche 8 bis 10, dadurch gekennzeichnet, daß man als Reduktionsmittel für die Stickoxide Methanol oder ein durch katalytische Zersetzung bzw. durch Wasserdampf-Reformierung von Methanol erhaltenes Gasgemisch im Temperaturbereich von 150-300°C einsetzt.

13. Verwendung nach Anspruch 11 oder 12, dadurch gekennzeichnet, daß man für die Zersetzung bzw. Wasserdampf-Reformierung des Methanols an sich bekannte Reformierkatalysatoren einsetzt.

14. Verwendung nach Anspruch 10, dadurch gekennzeichnet, daß man Edelmetall-Trägerkatalysatoren, insbesondere auf Titandioxid, Zirkondioxid oder Cerdioxid bzw. kupferhaltige Katalysatoren einsetzt.

15. Verwendung nach einem der Ansprüche 11 bis 13, dadurch gekennzeichnet, daß man als Reformierkatalysator einen Katalysator einsetzt, der

A) eine Metallkomponente aus einem oder mehreren Elementen der 8. Nebengruppe des Periodensystems auf einem Trägermaterial auf der Basis

$B_1$) von $TiO_2$ oder $CeO_2$, gegebenenfalls im Gemisch mit anderen feuerfesten Metalloxiden und/oder hydraulischen Bindern oder

$B_2$) von $TiO_2$, das auf die Oberfläche des vorgeformten feuerfesten Materials aus $Al_2O_3$ oder Keramik aufgebracht ist,

enthält.

16. Verwendung nach einem der Ansprüche 11 bis 15, dadurch gekennzeichnet, daß man bei der Wasserdampf-Reformierung ein Molverhältnis zwischen Methanol und $H_2O$ von etwa 1 bis 5 anwendet.

17. Verwendung nach einem der Ansprüche 11 bis 16, dadurch gekennzeichnet, daß man die Zersetzung bzw. Wasserdampf-Reformierung des Methanols bei Temperaturen im Bereich von etwa 400 bis 600°C durchführt.